# EUROPEAN PATENT APPLICATION

(11) **EP 1 507 400 A1**
(43) Date of publication of application: **16.02.2005**
(21) Application number: 04254506.1
(22) Date of filing: 28.07.2004
(51) Int. Cl.: H04N 1/00

(54) **Methods and apparatus for facsimile reception in mobile devices having simultaneous voice and data capabilities**

(30) Priority: 15.08.2003 US 641444
(71) Applicant: LUCENT TECHNOLOGIES INC., Murray Hill, New Jersey 07974-0636 (US)
(72) Inventor: Bryson, Sidney L., Bolingbrook, IL 60490 (US)
(74) Representative: Watts, Christopher Malcolm Kelway, Dr.

(57) **Abstract**

Systems and techniques for receiving facsimile transmissions through a mobile device and simultaneously or subsequently transferring facsimile data to a remote device for storage, printing or other uses are described. A mobile telephone establishes a voice connection to a facsimile transmission device and receives facsimile data through the voice connection. The facsimile data may be buffered for immediate transfer to a remote device or stored for later retrieval and transfer, depending on preprogrammed options or user selections. When the facsimile data is to be transferred, a packet data connection is established between the mobile telephone and the remote device to which the facsimile data is to be transferred and the facsimile data is transferred to the remote device over the packet data connection. Reception of incoming facsimile data over the voice connection and transfer of the facsimile data over the packet data connection may occur substantially simultaneously, or transfer of the facsimile data may be delayed, according to user preferences.

## Description

### Field of the Invention

The present invention relates generally to improvements in wireless communication. More particularly, the invention relates to advantageous techniques and systems for receiving a transmission of facsimile data to a wireless device and using a simultaneously or subsequently established data connection to direct the facsimile data from the wireless device to appropriate data network resources for storage or printing.

### Background of the Invention

Mobile wireless devices, such as mobile telephones, continue to become more widely used and more capable. Many currently available mobile telephones, such as third generation mobile telephones, are able to engage in a voice connection and a packet data connection at the same time. A voice connection allows a user to carry on a conversation, and also allows a device to engage in data communications of the type that may be carried over a telephone connection, such as facsimile transmission and reception. A packet data connection allows a user of a mobile device to establish a connection to a packet data network, such as a local area network (LAN), and to communicate with various network resources using packet data transmission and reception. Alternatively, a user may establish a packet data connection to a public data network such as the Internet, thereby gaining access to publicly available resources or to private data networks and resources for which the user can be identified as an authorized user.

Facsimile, or fax, communication has long been a widespread and useful means of communication. Many users of wireless telephone services may occasionally or frequently need to receive faxes, and these users may need to receive faxes when they are away from their usual residence or workplace. A user's wireless telephone provides a dependable point at which the user may receive communications, and a sender may direct a fax to a user's fax-capable wireless telephone with confidence that the user can receive the fax whether or not the user is at his or her office or residence.

Prior art mobile telephones exist that have facsimile translation software and are capable of receiving fax communications over a voice communication channel. These telephones are capable of providing fax data to a printer or similar device through a direct connection, for example an interface cable connecting the mobile telephone to a printer. Such a solution is relatively cumbersome and does not take full advantage of the data transmission capabilities found in third generation telephones. Alternative solutions for allowing fax capabilities for mobile telephones are the incorporation of fax mailbox capabilities in the wireless network providing service to the telephone. Printing of fax data that has been stored in a fax mailbox typically requires the user to direct the transmission to a designated fax number other than the user's mobile telephone number. Such retrieval and transmission may be inconvenient for the user, and may also require additional centralized resources provided by the wireless network. The storage resources required for fax mailbox capabilities may be relatively substantial when multiplied by the millions of users that may be served by a telephone network.

Third generation mobile telephones typically have substantial data processing and storage capabilities, and these capabilities can only be expected to increase as mobile telephone technology continues to advance.

There exists, therefore, a need for systems and techniques allowing wireless devices to receive facsimile transmissions over a voice channel and to use data transmission capabilities of the devices to transmit the facsimile transmissions to remote devices for printing, storage or other use.

### Summary of the Invention

Among its several aspects, the present invention recognizes that a third generation telephone can be adapted as taught herein to receive a fax transmission of substantial size, and also to provide the ability to transfer data to remote devices using a packet data connection. To such ends, a mobile telephone according to an aspect of the present invention includes voice and data communication modules for engaging in voice and data connections as directed by a user. At any time, the telephone may engage in a voice connection, a data connection or both. The telephone also includes a fax reception and processing module for recognizing, formatting, storing and retransmitting fax communications received over a voice connection. The fax reception and processing module includes control software for directing the voice module to recognize and receive a fax communication, and also includes formatting and storage software for placing incoming fax data into a proper format and directing it to proper storage locations within the telephone.

In addition, the telephone includes a data connection module for transferring the fax data to a remote device. The data connection module includes a print driver for processing fax data in order to produce printer control language instructions for printing the fax transmission on a remote device and also includes software for establishing a packet data connection to a remote device and creating a stream of data packets in order to transfer the fax data to the remote device.

A more complete understanding of the present invention, as well as further features and advantages of the invention, will be apparent from the following Detailed Description and the accompanying drawings.

### Brief Description of the Drawings

Fig. 1 illustrates a system for transmitting a fax transmission to a wireless telephone, the wireless telephone then relaying the received fax data over a packet data connection, according to an aspect of the present invention;
Fig. 2 illustrates a wireless telephone capable of receiving a fax transmission and simultaneously relaying the received fax data over a packet data connection, according to an aspect of the present invention;
Fig. 3 illustrates a packet data connection module according to an aspect of the present invention, used to transfer fax data from a wireless telephone using a packet data connection; and
Fig. 4 illustrates a process of fax reception and transfer according to an aspect of the present invention.

### Detailed Description

The present invention will be described more fully hereinafter with reference to the accompanying drawings, in which several presently preferred embodiments of the invention are shown. This invention may, however, be embodied in various forms and should not be construed as limited to the embodiments set forth herein. Rather, these embodiments are provided so that this disclosure will be thorough and complete, and will fully convey the scope of the invention to those skilled in the art.

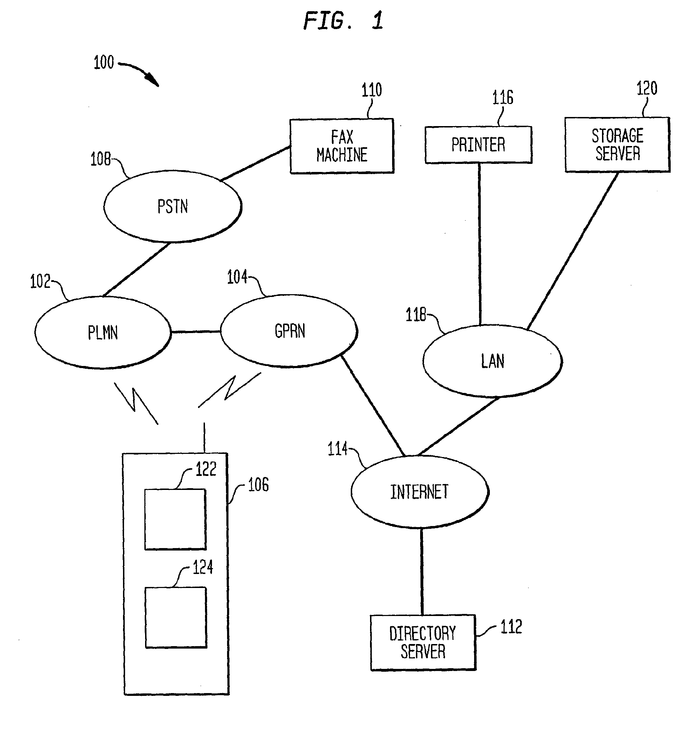

Fig. 1 illustrates a communication system 100 for transmitting fax data which is received at a wireless telephone and simultaneously or subsequently relayed for printing. The system 100 includes a public land mobile network (PLMN) 102 and a general packet radio service network (GPRN) 104. The PLMN 102 and the GPRN 104 may both support a plurality of wireless transceivers such as the mobile telephone 106, having simultaneous voice and packet data capabilities. Only a single mobile telephone 106 is illustrated here, but it will be recognized that the networks 102 and 104 typically support a very large number of telephones or other communication devices. The PLMN 102 typically includes one or more connections to public telephony switched networks (PSTN) such as the PSTN 108. A PSTN provides landline telephone services to conventional telephones, fax machines and similar communication devices. The PSTN 108 suitably provides a wireline connection to a fax machine 110, allowing a user of the fax machine 110 to establish a voice connection to the mobile telephone 106 by simply dialing the number of the telephone 106. A voice connection is a connection over a voice channel, allowing the transfer of information using signals and tones conventionally used for voice communication. In addition to conventional voice communication, voice connections allow the transfer of information using devices such as modems and fax machines. These devices transfer data in the form of a series of tones that are typically in an audible frequency range, even though these tones are not comprehensible to a human user.

The PSTN 108 relays the call to the PLMN 102, which in turn establishes a voice connection to the telephone 106. The fax machine 110 communicates with the telephone 106 through a series of tones, which are interpreted by the telephone 106, suitably using onboard fax communication software.

Upon recognizing an incoming fax, the telephone 106 suitably establishes a packet data connection to the GRPN 104, in order to gain access to resources or devices accessible through packet data transmissions. Such resources may include, for example, network servers or printers for storage or printing of data. Each device to which the telephone 106 may establish a packet data connection may suitably be identified by a unique network address such as an internet protocol (IP) address. The telephone 106 may direct a transmission to a device, for example, a printer, by providing its address to the GPRN 104.

Alternatively, a user may identify a device to which the transmission is to be directed by employing a user interface to allow a user to provide a uniform resource locator (URL). The URL is then passed to the GPRN 104 and relayed to a directory server 112, suitably residing on a network such as the Internet 114. The directory server 112 uses the URL as an index to look up the network address of the device. The device address may then be returned to the telephone 106 and used for packet data communication. Alternatively, an internet protocol network address for the target device, if known, may be directly supplied by a user.

As a further alternative, the user may use the telephone 106 to establish a connection to a specific local area network hosting the device and select a resource from a list provided by the local area network, with the address of the selected device being returned to the telephone 106 for use in communication. The telephone 106 also supplies necessary security and authentication information, either information that has been previously stored or information that is supplied by the user in response to requests from the device or the network hosting the device.

Once the device has been identified and proper security data submitted and authenticated, the telephone 106 establishes a packet data connection with the device. In the present exemplary embodiment, the telephone 106 may establish a connection to a printer 116, supplying its address to the GPRN 104. The printer 116 belongs to a local area network 118, which is accessible to the GPRN 104 through the Internet 114. The network 118 also hosts a storage server 120, which is available for storage of fax transmissions. In order to transfer data received from a fax transmission for storage using the server 120, the user simply employs the telephone 106 to supply the address of the server 120 to the GPRN 104 in addition to or as an alternative to supplying the address of the printer 114. If the user supplies the address of both the printer 114 and the server 120, the fax transmission may be simultaneously printed and stored.

The telephone 106 suitably includes fax reception and processing software 122, as well as sufficient memory 124 to buffer fax data received from the fax machine 110 while establishing a connection with the printer 116 and relaying the fax data to the printer 116. Typically, the packet data connection between the telephone 106 and the printer 116 is much faster than the voice connection between the fax machine 110 and the telephone 106. The minimum amount of buffer memory required, therefore, need only be sufficient to provide buffering while the data connection is being established. Present day mobile telephones, however, typically have substantial amounts of memory available, sufficient to store several lengthy fax transmissions in their entirety, so that data buffering can be expected to be easily accomplished.

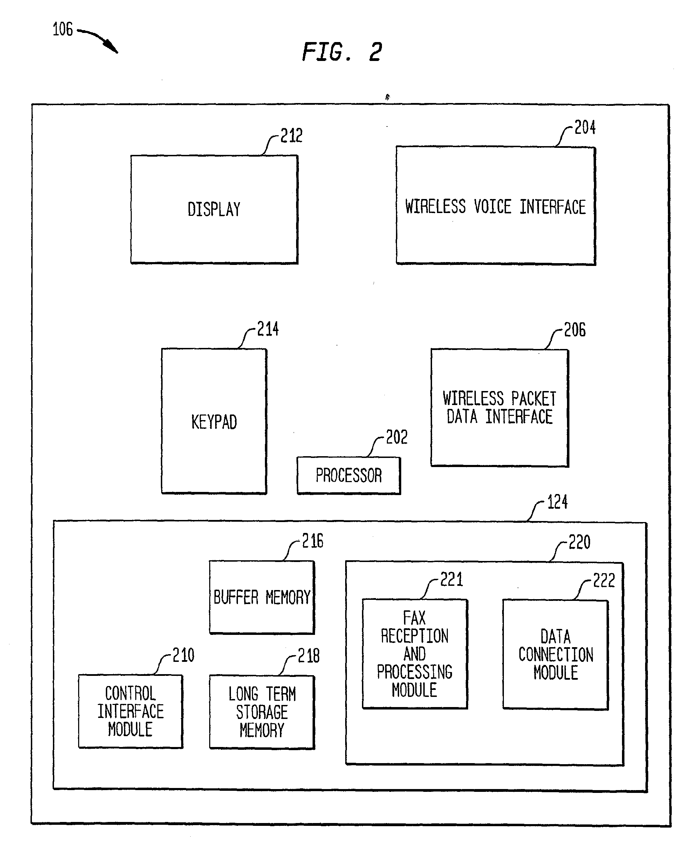

Fig. 2 illustrates additional details of the telephone 106. The telephone 106 includes a processor 202, the memory 124, a wireless voice interface 204, wireless packet data interface 206, user control interface 210, display 212 and keypad 214. The wireless voice interface 204 is used to establish and maintain a voice connection with a PLMN such as the PLMN 102 and the wireless packet data interface is used to establish and maintain a packet data connection with a GPRN such as the GPRN 104. The memory 124 suitably includes buffer memory 216, program memory 218 and long term storage memory 220. The telephone 106 hosts the fax reception and processing module 221, suitably implemented as software residing in the program memory 218 and executable by the processor 202. The telephone 200 may also host a packet data connection module 222, to allow a user to identify a device to which to transfer fax data, to provide user identification and authentication information required for access to a device and to establish and maintain a packet data connection with the device and to transfer data using the packet data connection.

A fax transmission to the telephone 106 is initiated when a facsimile transmission device, such as the fax machine 110 of Fig. 1, calls the telephone number associated with the telephone 106. A voice call is routed to the telephone 106 by the PLMN 102 serving the telephone 106. The PLMN sends a signal indicating an incoming voice call. The fax reception and processing module 221 may suitably be adapted to automatically answer an incoming call and to monitor the signals being received in order to determine if they indicate a fax call or if the signals indicate sounds typical of a normal voice telephone call. When a call from a fax machine, such as the fax machine 110, is answered, the fax machine typically emits audible tones identifying an incoming fax transmission. The fax reception and processing module 221 can identify an incoming call as being a fax transmission by detecting these characteristic tones. If these tones are not present, the fax reception and processing module 221 can detect that the call is not a fax transmission and can therefore identify the call as a voice call.

Depending on the particular characteristics and settings of the fax reception and processing module 222, the fax module 221 may automatically answer the call and alert the user if the call is a voice call, thereby allowing the user to begin conversation, but to initiate a fax connection if the call is a fax call. Alternatively, the fax module 221 may be directed to initiate fax reception only upon a command from the user. In such a case, the user may answer an incoming call and listen to the sounds being heard. If the sounds are characteristic of a fax transmission, the user may invoke the fax module 221 and direct it to answer the call as a fax call. If the user does not hear sounds characteristic of a fax transmission, he or she answers the call in a conventional way.

Once an incoming fax transmission has been identified and the fax module 221 has established contact with the facsimile device 110, fax transmission is initiated. Incoming fax data is stored in the buffer memory 216. If desired, the fax module 221 can be programmed so that a fax transmission is stored within the telephone 200 for later transmission to a remote device. In that case, the fax data is passed from the buffer area 216 to the long term memory 220. However, a user will often desire to use a data connection to transfer the fax transmission to a remote device while the fax transmission is still being received through a voice connection. This transfer is preferably accomplished using a packet data connection to transfer the incoming fax data to a printer or other remote device.

In order to transfer incoming fax data to a remote device, the data connection module 222 establishes a packet data connection with a desired device. The data connection module 222 may be invoked through entry of an appropriate user command, or may be automatically invoked by the fax module 221, depending on the design and settings of the fax module 221 and the data connection module 222. The user preferably enters commands using the keypad 214. The commands are processed by the user interface module 210 and passed to the appropriate one of the modules 221 and 222. Instructions and prompts are presented to the user through the user interface module 210, which formats the instructions and prompts and displays them using the display 212.

Once the packet data connection is established, the fax module 221 passes fax data from the buffer area 216 to the data connection module 222. The data connection module 222 transmits the fax data to the desired remote device in the form of a stream of data packets.

The data connection module 222 establishes a connection with a device by identifying the address of the device and transmitting data in the form of a series of packets addressed to the device. Each packet contains the address of the device to which it is to be routed. In the present exemplary embodiment, the data connection module 222 transmits packets to the GPRN 104, which relays them to the Internet 114. The packets are then routed to a device having an internet protocol (IP) address. Such devices may have independent connections to the Internet, or may be part of local area networks. Provided that a user is authorized to communicate with a device and proper authentication has been performed, transmission of packets to a particular device is typically transparent to a user once a connection has been established. Each packet is simply transmitted to the Internet using conventional techniques for packet data transmission, and the various routers and other resources on the Internet direct the packet to its destination.

The data connection module 222 suitably provides a number of different alternative ways for designating a device to which a fax transmission is to be directed. One alternative is to program the data connection module 222 with one or more device addresses, and to select settings to determine how a fax transmission is to be handled. For example, the user may designate one of the devices as a default device, so that the data connection module 222 will direct a fax transmission to the designated default device. As another alternative, the data connection module 222 may display an alert that a fax is being received and request that the user designate the disposition of the fax. The user may be allowed to select storage or transfer of the fax. If the fax is to be transferred, the user may be allowed to designate a device whose address is stored, or to enter an address for a device to which the fax is to be transferred. The address may be entered, for example, in the form of an IP address or in the form of a uniform resource locator (URL), allowing a lookup of the IP address of the device. In addition to entering the address of the device, either for storage or during fax transmission, the user may also enter authentication information to allow use of the device; such as a usemame and password. The usemame and password for a device may be stored in association with the address of the device or may be entered by the user in response to a direction from the data connection module 222.

Once the correct device address has been determined, the data connection module 222 attempts to establish a connection to the device by transmitting an appropriate stream of packets using the GPRN. Once a connection has been established, the data connection module 222 retrieves data from the buffer 216, creates data packets using the retrieved data and transmits the data packets to the designated device.

The data connection module 222 is preferably adapted to respond appropriately when a connection attempt fails or when another condition occurs interfering with proper transfer of a fax transmission. For example, if a device address is not found or if access to a device is denied, the data connection module 222 may provide an alert to the user, informing the user of the problem and allowing the user to indicate the proper corrective action to be taken. For example, if a device address is not found, the user may be allowed to enter a different address, or if access to a device is denied a user may be prompted to check the authentication information and try again. The data connection module 222 may suitably allow for a relatively broad range of user options for responding to problems in fax transfer, with the choices being constrained chiefly by considerations related to user convenience in reading information and entering commands, given the typically relatively small size of displays such as the display 212 and the difficulties in entering information when using a keypad such as the keypad 214.

As an alternative to transferring incoming fax data while it is being received over the voice connection, the telephone 200 may suitably store the fax transmission in the long term memory 220. The long term memory 220 may suitably comprise nonvolatile memory such as electrically erasable programmable read-only memory (EEPROM). The option to store an incoming fax transmission may be selected beforehand, or alternatively the user may select such an option once a fax transmission has been recognized. Suitably, the fax module 221 stores incoming fax data in the buffer area 216 until the fax transmission is completed. Once the fax transmission has been completed, the fax module 221 retrieves the fax data from the buffer memory 216 and uses it to create a data file for storage, suitably a fax image file of the type created by conventional fax software commonly used on personal computers. The fax module then stores the data file in the long term memory 220, where it may remain until it is transferred to a remote device or deleted. When the user wishes to transfer a stored fax image file to a remote device, he or she simply invokes the data connection module 222, suitably by entering appropriate commands using the keypad 214. The data connection module 222 allows the user to choose a fax image file to be transferred. The data connection module 222 further allows the user to select a remote device to which the transfer is to be made and transfers the stored fax image data to the selected remote device. The selection of the remote device is suitably accomplished using techniques similar to those described above, that is, selection of a device from a list of devices whose addresses have been previously stored, entry of a device address, or other similar techniques. Once a fax image file and a remote device have been selected, the data connection module 222 retrieves the selected image file from the long term memory 220 and transfers it to the selected device using a packet data connection.

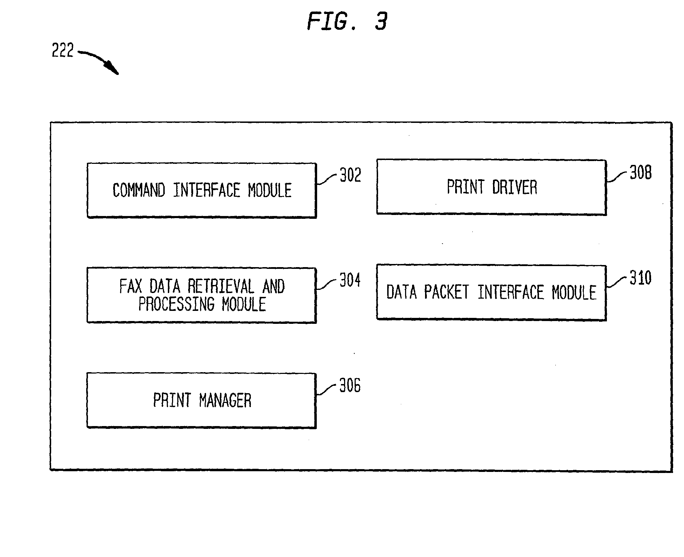

Fig. 3 illustrates the additional details of the data communication module 222. The data communication module 222 includes a command interface module 302, a fax data retrieval and processing module 304, a print manager 306, a print driver 308 and a packet data interface module 310. The command interface module 302 receives user commands from the user interface module 210, and sends user messages, instructions and alerts to the user interface module 210. The user interface module 210 communicates as required with the packet data communication module 222, in order to convey user information, such as device addresses, to the packet data interface module 310. The fax data retrieval and processing module 304 retrieves fax data as needed for transfer to a remote device and formats the retrieved data so that data packets can be constructed in order to transmit the fax data to the remote device. If the remote device is a printer, the fax data module 304 invokes the print manager 306 to convert the data to printable form. Typically, the print manager 306 directs the fax data to a print driver 308 in order to convert the fax data into printer command language for the printer being used. The print driver 308 then directs the printer command language data to the packet data interface module 310. The packet data interface module 310 receives the formatted fax data, prepares data packets containing the formatted fax data and transfers the data packets to the GPRN 104, which routes them to the remote device whose address is included in the data packets. The packet data interface module 310 also receives responses conveyed to the telephone 106 from the GPRN 104. These responses are typically in the form of data packets addressed to the telephone 106, and are assembled and interpreted by the packet data interface module 310, and acted on by the packet data interface module 310 or else passed to the proper module for action. For example, connection to a remote device may require several steps, in which the telephone 106 sends messages and receives messages from the remote device. The packet data interface module 310 suitably retrieves address and authentication data and passes it to the GPRN 104 in response to messages relayed to the module 310 by the GPRN 104 in the form of data packets.

Alternatively, a remote device may transmit error messages, user alerts or the like. In such cases, the packet data interface module 310 receives data packets relayed by the GPRN 104, assembles and interprets the packets, constructs messages and relays them to the command interface module 302, which in turn relays them to the user interface module 210 for presentation to the user.

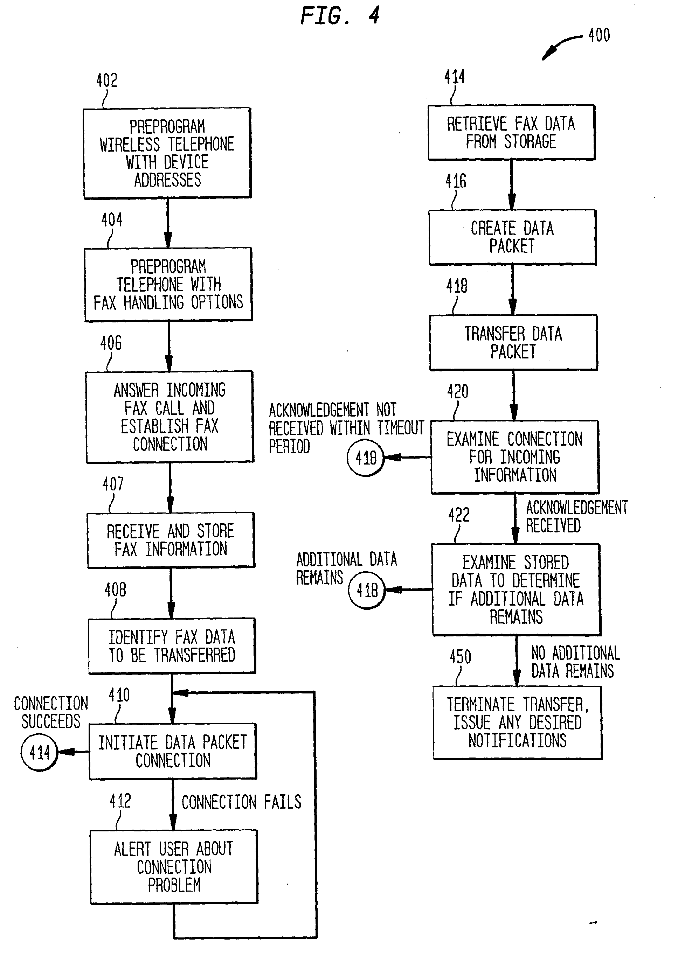

Fig. 4 illustrates the steps of a process 400 for fax reception and transfer according to an aspect of the present invention. At step 402, a wireless telephone is preprogrammed with addresses of various remote devices that may be used for fax handling, for example printing or storage of fax images, as well as with selections for managing fax transfers. For example, the telephone may be programmed to automatically transfer an incoming fax to a specified device, may be programmed to transfer a fax to a device designated by the user during an incoming fax or may be programmed to store a fax for later transfer. The telephone may suitably be similar to the telephone 106 of Fig. 1, and has simultaneous voice and packet data capability. At step 404, the telephone is preprogrammed with options for handling incoming faxes. Such options may include automatically treating an incoming call as a fax, allowing a user to answer a call and determine whether or not the call is a fax, or answering a call, determining whether or not the call is a fax and alerting the user if the call is not a fax. At step 406, upon receipt of an incoming fax call, the call is answered and a fax acknowledgement and connection is performed, either automatically or upon a user selection, depending on the programming of the telephone. At step 407, fax information is received and stored pending transfer. If the fax transmission is to be stored for later transfer, it may be stored in a relatively long term storage area, while if the fax is to be transferred while it is being received, the incoming data is suitably stored in a buffer area.

When a fax transmission is to be transferred to a remote device, the process proceeds to step 408 and the fax data to be transferred is identified. If the fax data to be transferred is an incoming fax transmission, the data to be transferred is the data being stored in the buffer. If a stored fax image is to be transferred, identification may be accomplished by a user designation, for example selection from a list of stored fax images.

The process then proceeds to step 410 and an attempt is made to initiate a packet data connection with a desired remote device. Depending on previous programming, an address of a previously designated remote device may be automatically retrieved and used to establish the connection or the device may be selected based on user selections from a list or other user entries, such as direct entry of an address. Any identification and authentication information required by the device is provided, for example by supplying previously stored information or by receiving and transferring inputs from a user. If the connection fails, for example because the authentication information is rejected, the process proceeds to step 412 and the user is alerted to the problem. The process then returns to step 410 in order to allow the user to make another attempt to establish a data connection, for example by selecting a different device or by reentering authentication information.

Returning now to step 410, if the connection is successfully established, the process proceeds to step 414 and fax data is retrieved from storage, which may be buffer memory or relatively long term storage memory, depending on whether transfer occurs during the receipt of the fax over a voice connection or after receipt and storage of the fax. Fax data is suitably retrieved in relatively small units, with each unit of data being suitable for inclusion in a data packet such as a transfer control protocol/Internet protocol (TCP/IP) packet. As each unit of data is retrieved, the process proceeds to step 416 and a data packet is created including the retrieved data unit and the address of the device to which transfer is to be made. At step 418, the data packet is transferred to the selected device over the packet data connection. At step 420, the connection is examined for incoming information from the device to which the packet was sent. If the packet is not acknowledged within a time specified for timeout, the process returns to step 416 in order to retransmit the data packet. If an acknowledgement is received, the process proceeds to step 422 and the storage area is examined to determine if additional data remains to be transmitted. If so, the process returns to step 414 in order to retrieve and transfer additional data. If not, the data has been successfully transferred and the process proceeds to step 450. At step 450, the process terminates. If the telephone has been appropriately programmed, a notice may be sent to the user that transfer was successful.

While the present invention has been disclosed in the context of various aspects of presently preferred embodiments, it will be recognized that the invention may be suitably applied to other environments consistent with the claims which follow.

## Claims

1. A mobile telephone for facsimile reception over a voice channel and transfer of the facsimile data to a remote device, comprising:
a wireless voice interface for establishing a voice connection with a mobile telephony network and receiving voice data over the network;
a facsimile reception and processing module for acknowledging and establishing reception of facsimile data over the voice connection and storage of the facsimile data; and
a data connection module for establishing a wireless packet data connection with a remote device, the data connection module being operative to establish a packet data connection with the remote device, to retrieve stored facsimile data, to create data packets including the retrieved facsimile data and to transfer the data packets to the remote device over the wireless packet data connection.

2. The telephone of claim 2, wherein the data connection module accepts user selections in order to allow a user to choose a remote device to which the facsimile data may be transferred, the selecting being made from among the remote devices whose addresses are preprogrammed into the data connection module.

3. The telephone of claim 2, wherein the facsimile data and processing module stores incoming facsimile data for later retrieval or alternatively invokes the data connection module to transfer facsimile data to a remote device while facsimile data is being received over the voice connection.

4. The telephone of claim 3, wherein the data connection module includes a user interface module utilized to enter an address of a remote device to which a transfer is to be made.

5. The telephone of claim 4, wherein the data connection module transfers required authentication and security information to a remote device to which facsimile data is to be transferred.

6. The telephone of claim 5, wherein the data connection module receives a request for authentication from the remote device upon initiation of a data connection with the remote device and presents the request to the user through the user interface module and wherein the data connection module relays the authentication and security information to the remote device upon receipt from the user interface module.

7. A system for providing reception of facsimile data over a voice connection with a mobile device and transfer of the facsimile data from the mobile device to a remote device over a packet data connection, comprising:
a mobile telephone network for establishing a voice connection with the mobile device and transferring facsimile data to the mobile device over the voice connection; and
a general packet radio network for establishing a packet data connection with the mobile device and the remote device, receiving facsimile data from the mobile device over the packet data connection with the mobile device and transferring the facsimile data to the remote device over wireless packet data connection with the remote device.

8. A method of facsimile reception and transfer, comprising the steps of:
establishing a wireless voice connection between a facsimile transmission device and a wireless mobile device;
receiving facsimile data from the facsimile transmission device over the wireless voice connection;
establishing a wireless packet data connection between the wireless mobile device and a remote device; and
transferring the facsimile data from the wireless mobile device and the remote device over the packet data connection.

9. The method of claim 8, wherein the steps of establishing the wireless packet data connection and transferring the facsimile data from the wireless mobile device to the remote device may occur during the execution of the step of receiving the facsimile data over the voice connection.

10. The method of claim 9, wherein the step of receiving the facsimile data is followed by a step of storing the facsimile data for later transfer and the steps of opening a packet data connection and transferring the facsimile data to a remote device are executed upon a user selection to transfer previously received facsimile data.
